(19) Europäisches Patentamt
European Patent Office
Office européen des brevets

(11) **EP 3 048 131 A1**

(12) **EUROPEAN PATENT APPLICATION**
published in accordance with Art. 153(4) EPC

(43) Date of publication:
**27.07.2016 Bulletin 2016/30**

(21) Application number: **14844531.5**

(22) Date of filing: **16.09.2014**

(51) Int Cl.:
*C08J 5/18* [(2006.01)]    *C08L 77/02* [(2006.01)]
*C08K 3/00* [(2006.01)]    *B29D 7/01* [(2006.01)]
*H01M 2/02* [(2006.01)]

(86) International application number:
**PCT/KR2014/008589**

(87) International publication number:
**WO 2015/037962 (19.03.2015 Gazette 2015/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **16.09.2013 KR 20130110954
15.09.2014 KR 20140122118**

(71) Applicant: **Kolon Industries, Inc.
Gwachoen-si, Gyeonggi-do 427-709 (KR)**

(72) Inventors:
• **LEE, Doo-Bong
Yongin-si
Gyeonggi-do 446-797 (KR)**
• **PARK, Han Soo
Yongin-si
Gyeonggi-do 446-797 (KR)**
• **RYU, Deug-Soo
Yongin-si
Gyeonggi-do 446-797 (KR)**

(74) Representative: **Ter Meer Steinmeister & Partner
Patentanwälte mbB
Nymphenburger Straße 4
80335 München (DE)**

(54) **NYLON FILM**

(57)    The present invention relates to a nylon film, and more particularly, to a nylon film having excellent depth characteristics when being formed in a pouch shape. More particularly, the present invention relates to a nylon film which has high machine direction and transverse modulus, is well-balanced, and thus has good formability.

EP 3 048 131 A1

**Description**

[Technical Field]

The present invention relates to a nylon film, and more particularly, to a nylon film having excellent depth characteristics when being formed in a pouch shape.

More particularly, the present invention relates to a nylon film which has a high modulus, and an excellent balance between machine direction and transverse modulus, and thus has excellent formability.

[Background Art]

A nylon film has an excellent gas barrier property as compared to other films to thereby be mainly used as a raw material for vacuum-packing food, a balloon, or the like, and recently, use of the nylon film as a package for a drug or a pouch for a battery has increased.

Currently, as the pouch for a battery, a nylon film or PET film laminated with aluminum foil and a CPP film has been used. This film has been used in a small sized secondary battery in a mobile phone, and a case of using this film in a large capacity battery in an electric vehicle or a home electric power storage device has gradually increased. Therefore, there is a need to improve formability of the nylon film.

According to the related art, in order to improve formability and a slip property, a method of coating a fatty acid amide based ingredient on a surface of a film (Japanese Patent Laid-Open Publication No. 2002-216714, August 2, 2002) has been used, or formability of a pouch has been improved using a wrinkle suppressing member at the time of formation (Korean Patent Laid-Open Publication No. 10-2008-0081845, September 10, 2008).

However, in the case of Patent Document 1, since an additional coating process is required in order to impart the slip property, and a coating ingredient is transferred to process equipment at the time of manufacturing a laminating film, an operation of cleaning the process equipment is required after manufacturing the laminating film, such that productivity may be decreased. Further, a processing method for improving the formability of the pouch is disclosed in detail in Patent Document 2, but there is no detailed description of the features of a nylon film.

Therefore, the present inventors studied in order to improve formability by improving modulus characteristics of the nylon film without an additional coating process, and since the film should have the same tensile strength at vertex portions at the time of forming a pouch, the present inventor tried to manufacture the film so that a machine direction modulus and a transverse modulus of the film are equal to each other.

[Related Art Document]

Patent Document 1: Japanese Patent Laid-Open Publication No. 2002-216714 (August 2, 2002)
Patent Document 2: Korean Patent Laid-Open Publication No. 10-2008-0081845 (September 10, 2008)

[Disclosure]

[Technical Problem]

An object of the present invention is to provide a nylon film of which a modulus is high, a machine direction modulus and a transverse modulus are similar to each other, and thus formation depth characteristics are excellent at the time of manufacturing a pouch for a battery.

[Technical Solution]

In one general aspect, there is provided a nylon film of which a machine direction modulus and a transverse modulus satisfy the following Equation 1, a ratio of the machine direction modulus and the transverse modulus satisfies the following Equation 2, and a relative viscosity of a nylon resin measured in 95% sulfuric acid is in a range of 2.6 to 3.6.

[Equation 1]

$$50 \leq M_1$$

$$50 \leq M_2$$

(In Equation 1, $M_1$ is the modulus (MPa) measured by drawing the film by 5% in a machine direction, and $M_2$ is the modulus (MPa) measured by drawing the film by 5% in a transverse direction.)

[Equation 2]

$$0.9 \leq M_r \leq 1.1$$

(In Equation 2, $M_r$ = modulus (MPa) measured by drawing the film by 5% in the machine direction/modulus (MPa) measured by drawing the film by 5% in the transverse direction).

In another general aspect, a method of manufacturing a nylon film includes:

a) melting a nylon chip and extruding the melted nylon chip using an annular die;
b) simultaneously biaxially drawing the extruded film 2.85 to 3 times; and
c) heat treating the drawn film at a temperature of 180 to 200°C.

In another general aspect, a cell pouch for a battery contains the nylon film as described above.

[Advantageous Effects]

A nylon film according to the present invention may have a high modulus, a machine direction modulus and a transverse modulus that are similar to each other, and excellent depth characteristics at the time of being formed in a pouch shape.

[Best Mode]

Hereinafter, an aspect of the present invention will be provided in order to describe the present invention in more detail.

According to an aspect of the present invention, there is provided a nylon film of which a machine direction modulus and a transverse modulus satisfy the following Equation 1, and a ratio of the machine direction modulus and the transverse modulus satisfies the following Equation 2.

[Equation 1]

$$50 \leq M_1$$

$$50 \leq M_2$$

(In Equation 1, $M_1$ is a modulus (MPa) measured by drawing a film by 5% in a machine direction (MD), and $M_2$ is a modulus (MPa) measured by drawing the film by 5% in a transverse direction (TD)).

[Equation 2]

$$0.9 \leq M_r \leq 1.1$$

(In Equation 2, $M_r$ = modulus (MPa) measured by drawing the film by 5% in the machine direction/modulus (MPa) measured by drawing the film by 5% in the transverse direction).

According to another aspect of the present invention, there is provided a nylon film of which a machine direction modulus and a transverse modulus satisfy the following Equation 1 and a ratio of the machine direction modulus and the transverse modulus satisfies the following Equation 2, and in which inorganic particles are contained.

$$[\text{Equation } 1]$$

$$50 \leq M_1$$

$$50 \leq M_2$$

(In Equation 1, $M_1$ is a modulus (MPa) measured by drawing a film by 5% in a machine direction (MD), and $M_2$ is a modulus (MPa) measured by drawing the film by 5% in a transverse direction (TD)).

$$[\text{Equation } 2]$$

$$0.9 \leq M_r \leq 1.1$$

(In Equation 2, $M_r$ = modulus (MPa) measured by drawing the film by 5% in the machine direction/modulus (MPa) measured by drawing the film by 5% in the transverse direction).

In more detail, in the nylon film, the machine direction modulus and the transverse modulus may satisfy the following Equation 3.

$$[\text{Equation } 3]$$

$$50 \leq M_1 \leq 500$$

$$50 \leq M_2 \leq 500$$

(In Equation 3, $M_1$ is the modulus (MPa) measured by drawing the film by 5% in the machine direction (MD), and $M_2$ is the modulus (MPa) measured by drawing the film by 5% in the transverse direction (TD)).

Further, according to the present invention, a relative viscosity (measured in sulfuric acid (95%)) of a nylon resin used to manufacture the nylon film may be in a range of 2.6 to 3.6.

The present inventors studied in order to allow a pouch to be manufactured to have a deep depth at the time of manufacturing the pouch for a battery using a nylon film, and as a result, the present inventors found that formability may be significantly improved and depth characteristics may be improved by adjusting a relative viscosity of a nylon resin, which is used as a compound resin of a master batch at the time of manufacturing a nylon film, in a specific range while adjusting a machine direction modulus and a transverse modulus to satisfy Equations 1 and 2, thereby completing the present invention.

In one aspect of the present invention, the machine direction modulus and the transverse modulus, which are measured using ASTM D882, mean values measured by drawing a test sample having a width of 10mm and a length of 500mm by 5% at which plastic deformation is not generated at the time of drawing the test sample at a drawing rate of 300mm/min, a temperature of 23°C and a relative humidity of 50%.

In this case, it is preferable that the machine direction modulus and the transverse modulus are 50MPa or more. In detail, the higher the modulus, the more preferable, but the machine direction modulus and the transverse modulus may be 50 to 500MPa. When the modulus satisfy the above-mentioned range, at the time of forming the film in a cell pouch shape, a formation depth is 5mm or more, such that formability may be further improved.

In addition, it is preferable that the ratio of the machine direction modulus and the transverse modulus is 0.9 to 1.1, and the closer the ratio is to 1, the more preferable in that the nylon film is uniformly drawn at corners and vertexes to thereby form a pouch having uniform physical properties at the time of forming the nylon film in a cell pouch shape.

In one aspect of the present invention, the nylon film is not particularly limited, but may be made of, for example, nylon 6, nylon 66, nylon 46, nylon 11, nylon 12, nylon 610, nylon 612, a nylon 6/66 copolymer, a nylon 6/66/610 copolymer, nylon MXD6, nylon 6T, a nylon 6/6T copolymer, a nylon 66/PP copolymer, a nylon 66/PPS copolymer, methoxymethylated 6-nylon, methoxymethylated 6-610-nylon, methoxymethylated 612-nylon, and the like.

In addition, the nylon film according to the present invention may be a biaxially drawn film, and manufactured by being simultaneously biaxially drawn. In view of a balance between the machine direction modulus and the transverse modulus of the nylon film, it is preferable that the nylon film is a simultaneously biaxially drawn film.

The nylon film may be manufactured to have a suitable thickness in a range of 10 to 100μm, more specifically, 5 to 50μm to thereby be used.

It is preferable that a base resin used in the nylon film has a relative viscosity of 3.0 to 3.8. In the case in which the relative viscosity is less than 3, after forming the nylon film, physical properties of the film may be deteriorated, and in the case in which the relative viscosity is more than 3.8, flowability may be deteriorated at the time of melt-extrusion, a drawing property may be deficient at the time of drawing, such that physical properties of the film to be required may not be satisfied.

In one aspect of the present invention, the nylon film may further contain inorganic particles of one or two or more selected from zeolite, alumina, silica, caoline, $Na_2O$, and $CaO$, thereby improving the slip property.

The inorganic particles may be contained in the entire film in a range of 100 to 3000ppm, more specifically, 1000 to 2500ppm, and when the inorganic particles are contained within the above-mentioned range, a nylon film having an excellent slip property without affecting formability may be provided.

Although not limited, the inorganic particles having an average particle size of 0.05 to 2μm may be used, and prepared as a master batch to thereby be used. A relative viscosity (measured in sulfuric acid (95%)) of the nylon resin used in compounding of the master batch may be preferably 2.6 to 3.6. In the case in which the relative viscosity is less than 2.6, dispersibility of particles may be excellent, but at the time of mixing the nylon resin with the base resin of the nylon film, a viscosity difference may be increased, such that dots at which printing or adhesive-coating is not entirely performed at the time of printing or adhesive-coating the nylon film after forming the nylon film may be formed, thereby deteriorating quality of a final product. Further, in the case in which the relative viscosity is more than 3.6, dispersibility of the particles may be deteriorated, such that physical properties of the film to be required may not be satisfied.

In one aspect of the present invention, the nylon film may be extruded using an annular die, and biaxially drawn by a tubular method to thereby be manufactured.

In more detail, according to another aspect of the present invention, a method of manufacturing a nylon film may include:

a) melting a nylon chip and extruding the melted nylon chip using an annular die;
b) simultaneously biaxially drawing the extruded film 2.85 to 3 times; and
c) heat treating the drawn film at a temperature of 180 to 200°C.

Further, in step a), a master batch chip containing inorganic particles may be mixed with the nylon chip and then melted.

The master batch chip containing the inorganic particles may be obtained by mixing a nylon resin and the inorganic particles with each other in a twin screw extruder at 240 to 250°C. In this case, the nylon resin used to manufacture the master batch chip may be the same as or different from that of the nylon chip used in step a), and may preferably have a relatively viscosity (measured in sulfuric acid (95%)) of 2.6 to 3.6. It is preferable that the inorganic particles are used in a range of 0.5 to 10 wt% based on the entire master batch, and it is preferable that a content of the master batch chip is adjusted and injected so that 5 to 10 wt% of the master batch chip is contained in the entire film.

In one aspect of the present invention, a nylon film of which a ratio of a machine direction modulus and a transverse modulus satisfies Equation 2 may be prepared by performing the simultaneously biaxially drawing in step b). At the time of drawing, a temperature may be 250 to 270°C, more specifically, 260 to 265°C. A draw ratio may be 2.85 to 3 times in a machine direction and a transverse direction. Further, the drawing may be performed by a tubular method as described above, but the present invention is not limited thereto. Another simultaneously biaxially drawing method capable of being generally used in the art may be used.

In one aspect of the present invention, in order to manufacture the nylon film satisfying Equations 1 and 2, there is a need to adjust a heat treatment temperature. In one aspect of the present invention, the nylon film satisfying Equations 1 and 2 may be manufactured by adjusting the heat treatment temperature to be 210°C or less, preferably, 200°C or less, and more specifically, 180 to 200°C. In the case in which the heat treatment temperature is higher than 210°C, the machine direction modulus is larger than the transverse modulus, such that the balance of the machine direction modulus and the transverse modulus may not be maintained.

Further, if necessary, the film may be relaxed at the time of heat treatment, and a relaxation rate is 3 to 8%, which is preferable in that the film having the desired modulus may be manufactured.

At the time of evaluating the nylon film according to the present invention using a method for measuring a formation depth to be described below, the nylon film may have a formation depth of 5mm or more, more specifically, 5 to 6mm, thereby having excellent formability.

The present invention includes a pouch for a battery, including the nylon film.

According to the present invention, the pouch for a battery may be composed of a nylon film layer, an aluminum foil layer, and a polypropylene layer.

Hereinafter, Examples will be provided in order to describe the present invention in more detail. However, the present invention is not limited to the following Examples.

Physical properties of a film according to the present invention were measured by the following methods.

1) Modulus

Modulus measurement: Instron equipment was used.

Measurement method: ASTM D882
Used device: Instron 5566
Measurement condition: Draw speed: 300mm/min, temperature: 23°C, relative humidity: 50%
Test sample size: width: 10mm, length: 500mm

The modulus was measured by the above-mentioned method at an elongation of 5.0%.

A modulus ratio was calculated as follows.

$$\text{Modulus ratio} = \text{modulus (MPa) measured by drawing the film by 5\% in a machine direction} / \text{modulus (MPa) measured by drawing the film by 5\% in a transverse direction}$$

2) Evaluation of Formation Depth

After laminating a nylon film, aluminum foil (thickness: $40\mu m$), and polypropylene film (thickness $40\mu m$), a depth of a pouch capable of being formed in a mold having a width of 34mm, a length of 54mm, and a depth of 15mm was confirmed. A depth of a pouch when the pouch burst was recorded.

[Example 1]

Nylon 6 (Kolon Industries Inc.) having a relative viscosity of 3.6 was mixed with 8 wt% of silica particles having an average particle size of $3\mu m$ based on the entire master batch, thereby preparing a mixed master batch in a twin screw extruder at 245°C.

Thereafter, the mixed master batch was mixed with a nylon 6 resin (relative viscosity: 3.6, Kolon Industries Inc.) so that a content of the silica particles in the mixture was 2400ppm, extruded in an annular die at 260°C, and simultaneously biaxially drawn 2.95 times in machine and transverse directions, respectively, using a tubular method, followed by heat treatment at 200°C, thereby manufacturing a nylon film having a thickness of $25\mu m$.

Machine direction and transverse modulus of the manufactured nylon film, and a modulus ratio thereof were measured, and the results were illustrated in the following Table 3.

Further, a pouch was manufactured using the nylon film manufactured as described above, and a depth of a pouch when the pouch burst was measured. The result was illustrated in the following Table 3.

[Examples 2 to 8]

A film was manufactured in the same manner as in Example 1 except for adjusting the draw ratio and the heat treatment temperature as illustrated in the following Table 1.

Machine direction and transverse modulus of the manufactured nylon film, and a modulus ratio thereof were measured, and the results were illustrated in the following Table 3.

Further, a pouch was manufactured using the nylon film manufactured as described above, and a depth of a pouch when the pouch burst was measured. The result was illustrated in the following Table 3.

[Example 9]

Nylon 6 (Kolon Industries Inc.) having a relative viscosity of 3.3 was mixed with 8 wt% of silica particles having an average particle size of 3μm based on the entire master batch, thereby preparing a mixed master batch in a twin screw extruder at 245°C.
Thereafter, the mixed master batch was mixed with a nylon 6 resin (relative viscosity: 3.3, Kolon Industries Inc.) so that a content of the silica particles in the mixture was 2400ppm, extruded in an annular die at 260°C, and simultaneously biaxially drawn 2.85 times in machine and transverse directions, respectively, using a tubular method, followed by heat treatment at 200°C, thereby manufacturing a nylon film having a thickness of 25μm.
Machine direction and transverse modulus of the manufactured nylon film, and a modulus ratio thereof were measured, and the results were illustrated in the following Table 3.
Further, a pouch was manufactured using the nylon film manufactured as described above, and a depth of a pouch when the pouch burst was measured. The result was illustrated in the following Table 3.

[Examples 10 to 12]

A film was manufactured in the same manner as in Example 9 except for adjusting the draw ratio and the heat treatment temperature as illustrated in the following Table 1.
Machine direction and transverse modulus of the manufactured nylon film, and a modulus ratio thereof were measured, and the results were illustrated in the following Table 3.
Further, a pouch was manufactured using the nylon film manufactured as described above, and a depth of a pouch when the pouch burst was measured. The result was illustrated in the following Table 3.

[Example 13]

Nylon 6 (BASF Corp.) having a relative viscosity of 3.6 was mixed with 8 wt% of silica particles having an average particle size of 3μm based on the entire master batch, thereby preparing a mixed master batch in a twin screw extruder at 245°C.
Thereafter, the mixed master batch was mixed with a nylon 6 resin (relative viscosity: 3.6, BASF Corp.) so that a content of the silica particles in the mixture was 2400ppm, extruded in an annular die at 260°C, and simultaneously biaxially drawn 2.95 times in machine and transverse directions, respectively, using a tubular method, followed by heat treatment at 200°C, thereby manufacturing a nylon film having a thickness of 25μm.
Machine direction and transverse modulus of the manufactured nylon film, and a modulus ratio thereof were measured, and the results were illustrated in the following Table 3.
Further, a pouch was manufactured using the nylon film manufactured as described above, and a depth of a pouch when the pouch burst was measured. The result was illustrated in the following Table 3.

[Example 14]

Nylon 6 (BASF Corp.) having a relative viscosity of 3.3 was mixed with 8 wt% of silica particles having an average particle size of 3μm based on the entire master batch, thereby preparing a mixed master batch in a twin screw extruder at 245°C.
Thereafter, the mixed master batch was mixed with a nylon 6 resin (relative viscosity: 3.3, BASF Corp.) so that a content of the silica particles in the mixture was 2400ppm, extruded in an annular die at 260°C, and simultaneously biaxially drawn 2.90 times in machine and transverse directions, respectively, using a tubular method, followed by heat treatment at 200°C, thereby manufacturing a nylon film having a thickness of 25μm.
Machine direction and transverse modulus of the manufactured nylon film, and a modulus ratio thereof were measured, and the results were illustrated in the following Table 3.
Further, a pouch was manufactured using the nylon film manufactured as described above, and a depth of a pouch when the pouch burst was measured. The result was illustrated in the following Table 3.

[Comparative examples 1 to 3]

A film was manufactured in the same manner as in Example 1 except for adjusting the draw ratio and the heat treatment temperature as illustrated in the following Table 2.
Machine direction and transverse modulus of the manufactured nylon film, and a modulus ratio thereof were measured, and the results were illustrated in the following Table 3.

Further, a pouch was manufactured using the nylon film manufactured as described above, and a depth of a pouch when the pouch burst was measured. The result was illustrated in the following Table 4.

[Comparative Example 4]

Nylon 6 (BASF Corp.) having a relative viscosity of 3.6 was mixed with 8 wt% of silica particles having an average particle size of 3μm based on the entire master batch, thereby preparing a mixed master batch in a twin screw extruder at 245°C.

Thereafter, the mixed master batch was mixed with a nylon 6 resin (relative viscosity: 3.6, BASF Corp.) so that a content of the silica particles in the mixture was 2400ppm, extruded in an annular die at 260°C, and simultaneously biaxially drawn 3.10 times in machine and transverse directions, respectively, using a tubular method, followed by heat treatment at 200°C, thereby manufacturing a nylon film having a thickness of 25μm.

Machine direction and transverse modulus of the manufactured nylon film, and a modulus ratio thereof were measured, and the results were illustrated in the following Table 3.

Further, a pouch was manufactured using the nylon film manufactured as described above, and a depth of a pouch when the pouch burst was measured. The result was illustrated in the following Table 4.

[Comparative examples 5 to 6]

A film was manufactured in the same manner as in Example 10 except for adjusting the draw ratio and the heat treatment temperature as illustrated in the following Table 2.

Machine direction and transverse modulus of the manufactured nylon film, and a modulus ratio thereof were measured, and the results were illustrated in the following Table 3.

Further, a pouch was manufactured using the nylon film manufactured as described above, and a depth of a pouch when the pouch burst was measured. The result was illustrated in the following Table 4.

Table 1

[Table 1]

|  |  | Example 1 | Example 2 | Example 3 | Example 4 | Example 5 | Example 6 | Example 7 |
|---|---|---|---|---|---|---|---|---|
| Extrusion Temperature (°C) |  | 260 | 260 | 260 | 260 | 260 | 260 | 260 |
| Draw Ratio | MD | 2.95 | 3.00 | 2.95 | 3.05 | 2.90 | 2.85 | 2.85 |
| | TD | 2.95 | 3.00 | 2.95 | 3.05 | 2.90 | 2.85 | 2.85 |
| Heat Treatment Temperature (°C) |  | 200 | 200 | 190 | 200 | 200 | 180 | 200 |
|  |  | Example 8 | Example 9 | Example 10 | Example 11 | Example 12 | Example 13 | Example 14 |
| Extrusion Temperature (°C) |  | 260 | 260 | 260 | 260 | 260 | 260 | 260 |
| Draw Ratio | MD | 3.05 | 2.85 | 2.85 | 3.05 | 3.05 | 2.95 | 2.90 |
| | TD | 3.05 | 2.85 | 2.85 | 3.05 | 3.05 | 2.95 | 2.90 |
| Heat Treatment Temperature (°C) |  | 180 | 200 | 180 | 200 | 180 | 200 | 200 |

Table 2

[Table 2]

| | | Comparative Example 1 | Comparative Example 2 | Comparative Example 3 | Comparative Example 4 | Comparative Example 5 | Comparative Example 6 |
|---|---|---|---|---|---|---|---|
| Extrusion Temperature(°C ) | | 260 | 260 | 260 | 260 | 260 | 260 |
| Draw Ratio | MD | 2.95 | 2.8 | 2.9 | 3.1 | 2.8 | 2.95 |
| | TD | 2.95 | 2.8 | 2.9 | 3.1 | 2.8 | 2.95 |
| Heat Treatment Temperature (°C) | | 215 | 200 | 150 | 200 | 200 | 215 |

Table 3

[Table 3]

|  | Example 1 | Example 2 | Example 3 | Example 4 | Example 5 | Example 6 | Example 7 |
|---|---|---|---|---|---|---|---|
| Machine direction modulus (MPa) (at Elongation of 5%) | 56.83 | 57.32 | 60.15 | 55.90 | 56.40 | 51.05 | 52.15 |
| Transverse Modulus (MPa) (at Elongation of 5%) | 53.75 | 55.64 | 59.75 | 54.90 | 51.43 | 56.60 | 51.18 |
| Machine direction modulus/Transverse Modulus | 1.06 | 1.03 | 1.01 | 1.02 | 1.10 | 0.90 | 1.02 |
| Formation Depth(mm) | 5.1 | 5.6 | 6 | 5.5 | 5 | 5 | 5.1 |
|  | Example 8 | Example 9 | Example 10 | Example 11 | Example 12 | Example 13 | Example 14 |
| Machine direction modulus (MPa) (at Elongation of 5%) | 53.15 | 53.72 | 50.38 | 55.12 | 51.12 | 56.14 | 53.54 |
| Transverse Modulus (MPa) (at Elongation of 5%) | 55.14 | 51.12 | 53.15 | 54.15 | 53.24 | 53.84 | 51.09 |
| Machine direction modulus/Transverse Modulus | 0.96 | 1.05 | 0.95 | 1.02 | 0.96 | 1.04 | 1.05 |
| Formation Depth(mm) | 5.2 | 5.1 | 5 | 5.4 | 5.2 | 5.4 | 5.1 |

As illustrated in Table 3, it may be appreciated that in the nylon film according to the present invention, the modulus was 50 or more, and the ratio of the machine direction modulus and the transverse modulus was in a range of 0.9 to 1.1, and in the case of manufacturing a cell pouch using this nylon film, the formation depth was 5mm or more, such that the nylon film had significantly excellent formability.

Table 4

[Table 4]

| | Comparative Example 1 | Comparative Example 2 | Comparative Example 3 | Comparative Example 4 | Comparative Example 5 | Comparative Example 6 |
|---|---|---|---|---|---|---|
| Machine direction modulus (MPa) (at Elongation of 5%) | 63.34 | 56.56 | 66.95 | 36.00 | 51.41 | 52.18 |
| Transverse Modulus (MPa) (at Elongation of 5%) | 55.33 | 47.24 | 46.85 | 36.09 | 42.58 | 40.27 |
| Machine direction modulus/Transverse Modulus | 1.14 | 1.20 | 1.43 | 1.00 | 1.21 | 1.30 |
| Formation Depth(mm) | 4.6 | 4.6 | 4.4 | 4.2 | 4.5 | 4.2 |

As illustrated in Table 4, it may be appreciated that in Comparative Examples, the machine direction modulus and the transverse modulus were adjusted by adjusting the draw ratio and the heat treatment temperature, and in Comparative Example 1 in which the modulus was more than 50MPa, but the ratio of the machine direction modulus and the transverse modulus was 1.14, the pouch burst at the depth of 4.6mm.

Further, it may be appreciated that in Comparative Example 2 in which the transverse modulus was 47.24MPa, and the ratio of the machine direction modulus and the transverse modulus was 1.2, the pouch burst at the depth of 4.6mm.

In addition, it may be appreciated that in Comparative Example 3 in which the transverse modulus was 46.85MPa, and the ratio of the machine direction modulus and the transverse modulus was 1.43, the pouch burst at the depth of 4.4mm.

Further, it may be appreciated that in Comparative Example 4 in which the ratio of the machine direction modulus and the transverse modulus was 1, but the machine direction modulus and the transverse modulus were 50MPa or less, the pouch burst at the depth of 4.2mm.

**Claims**

1. A nylon film of which a machine direction modulus and a transverse modulus satisfy the following Equation 1, a ratio of the machine direction modulus and the transverse modulus satisfies the following Equation 2, and a relative viscosity of a nylon resin is in a range of 2.6 to 3.6.

$$[\text{Equation 1}]$$

$$50 \leq M_1$$

$$50 \leq M_2$$

(In Equation 1, $M_1$ is a modulus (MPa) measured by drawing the film by 5% in a machine direction, and $M_2$ is a modulus (MPa) measured by drawing the film by 5% in a transverse direction.)

$$[\text{Equation 2}]$$

$$0.9 \leq M_r \leq 1.1$$

(In Equation 2, $M_r$ = modulus (MPa) measured by drawing the film by 5% in the machine direction/modulus (MPa) measured by drawing the film by 5% in the transverse direction.)

2. The nylon film of claim 1, wherein the machine direction modulus and the transverse modulus satisfy the following Equation 3.

$$[\text{Equation 3}]$$

$$50 \leq M_1 \leq 500$$

$$50 \leq M_2 \leq 500$$

(In Equation 3, $M_1$ is the modulus (MPa) measured by drawing the film by 5% in the machine direction, and $M_2$ is the modulus (MPa) measured by drawing the film by 5% in the transverse direction.)

3. The nylon film of claim 1, wherein a thickness of the nylon film is 10 to 100$\mu$m.

4. The nylon film of claim 1, wherein it comprises inorganic particles of any one or two or more of zeolite, alumina, silica, kaolin, $Na_2O$, and CaO.

5. The nylon film of claim 5, wherein the inorganic particles are contained in the entire film in a range of 100 to 3000ppm.

6. The nylon film of claim 1, wherein it is manufactured by being extruded using an annular die and biaxially drawn using a tubular method.

7. The nylon film of claim 1, wherein a formation depth of the nylon film measured by the method described description is 5mm or more.

8. A pouch for a battery comprising the nylon film of any one of claims 1 to 7.

9. A method of manufacturing a nylon film, the method comprising:

a) melting a nylon chip and extruding the melted nylon chip using an annular die;
b) simultaneously biaxially drawing the extruded film 2.85 to 3 times; and
c) heat treating the drawn film at a temperature of 180 to 200°C.

10. The method of claim 9, wherein at the time of drawing, a temperature is 250 to 270°C.

11. The method of claim 9, wherein the film is relaxed at a relaxation rate of 3 to 8% at the time of heat treatment.

# EP 3 048 131 A1

## INTERNATIONAL SEARCH REPORT

| International application No. |
|---|
| **PCT/KR2014/008589** |

### A. CLASSIFICATION OF SUBJECT MATTER

***C08J 5/18(2006.01)i, C08L 77/02(2006.01)i, C08K 3/00(2006.01)i, B29D 7/01(2006.01)i, H01M 2/02(2006.01)i***

According to International Patent Classification (IPC) or to both national classification and IPC

### B. FIELDS SEARCHED

Minimum documentation searched (classification system followed by classification symbols)
C08J 5/18; B32B 27/32; C09J 7/02; B29C 55/12; C08L 77/02; C08L 23/16; C08K 3/00; B29D 7/01; H01M 2/02

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: nylon resin, nylon film, modulus, relative viscosity, longitudinal, lateral, melting, extrusion, biaxially oriented, heat treatment

### C. DOCUMENTS CONSIDERED TO BE RELEVANT

| Category* | Citation of document, with indication, where appropriate, of the relevant passages | Relevant to claim No. |
|---|---|---|
| X | KR 10-2001-0048598 A (KOLON CORPORATION) 15 June 2001<br>See abstract, claims 1, 2 and page 2, lines 26-49. | 9-11 |
| A | | 1-8 |
| X | KR 10-2012-0001643 A (KOLON INDUSTRIES, INC.) 04 January 2012<br>See abstract, claims 1, 6 and paragraphs [0018], [0056], [0060]. | 9-11 |
| X | KR 10-2004-0102967 A (KOLON CORPORATION) 08 December 2004<br>See abstract, claims 1, 9 and page 6, line 5, page 6, lines 14-23. | 9-11 |
| A | KR 10-2013-0009620 A (KOLON INDUSTRIES, INC.) 23 January 2013<br>See abstract, claims 1, 4, 5, 14 and paragraph [0041]. | 1-11 |
| A | KR 10-2000-0005349 A (CRYOVAC, INC.) 25 January 2000<br>See abstract and claim 14. | 1-11 |

☐ Further documents are listed in the continuation of Box C. ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 12 DECEMBER 2014 (12.12.2014) | **12 DECEMBER 2014 (12.12.2014)** |

| Name and mailing address of the ISA/**KR** | Authorized officer |
|---|---|
| Korean Intellectual Property Office<br>Government Complex-Daejeon, 189 Seonsa-ro, Daejeon 302-701, Republic of Korea<br>Facsimile No. 82-42-472-7140 | Telephone No. |

Form PCT/ISA/210 (second sheet) (July 2009)

**14**

INTERNATIONAL SEARCH REPORT
Information on patent family members

International application No.

**PCT/KR2014/008589**

| Patent document cited in search report | Publication date | Patent family member | Publication date |
|---|---|---|---|
| KR 10-2001-0048598 A | 15/06/2001 | KR 10-0348157 B1 | 09/08/2002 |
| KR 10-2012-0001643 A | 04/01/2012 | CN 102971366 A | 13/03/2013 |
| | | JP 2013-533913 A | 29/08/2013 |
| | | KR 10-1427677 B1 | 13/08/2014 |
| | | TW 201202329 A | 16/01/2012 |
| | | WO 2012-002704 A2 | 05/01/2012 |
| | | WO 2012-002704 A3 | 26/04/2012 |
| KR 10-2004-0102967 A | 08/12/2004 | KR 10-0502261 B1 | 21/07/2005 |
| KR 10-2013-0009620 A | 23/01/2013 | CN 103648770 A | 19/03/2014 |
| | | EP 2727722 A2 | 07/05/2014 |
| | | JP 2014-523364 A | 11/09/2014 |
| | | KR 10-2013-0004146 A | 09/01/2013 |
| | | US 20130192736 A1 | 01/08/2013 |
| | | WO 2013-002603 A2 | 03/01/2013 |
| | | WO 2013-002603 A3 | 11/04/2013 |
| KR 10-2000-0005349 A | 25/01/2000 | AT 223308 T | 15/09/2002 |
| | | AT 271971 T | 15/08/2004 |
| | | AT 284789 T | 15/01/2005 |
| | | AU 1997-24410 B2 | 31/08/2000 |
| | | AU 723591 B2 | 31/08/2000 |
| | | BR 9708657 A | 03/08/1999 |
| | | CA 2251682 A1 | 23/10/1997 |
| | | CA 2251682 C | 08/06/2004 |
| | | CN 1074987 C | 21/11/2001 |
| | | CN 1222115 A | 07/07/1999 |
| | | CO 4820404 A1 | 28/07/1999 |
| | | DE 69715179 D1 | 10/10/2002 |
| | | DE 69715179 T2 | 02/01/2003 |
| | | DE 69730058 D1 | 02/09/2004 |
| | | DE 69730058 T2 | 21/07/2005 |
| | | DE 69731990 D1 | 20/01/2005 |
| | | DE 69731990 T2 | 29/12/2005 |
| | | EP 0892719 A1 | 14/03/2001 |
| | | EP 0892719 B1 | 04/09/2002 |
| | | EP 1110715 A1 | 27/06/2001 |
| | | EP 1110715 B1 | 28/07/2004 |
| | | EP 1251002 A1 | 23/10/2002 |
| | | EP 1251002 B1 | 15/12/2004 |
| | | JP 03483576 B2 | 06/01/2004 |
| | | JP 03977754 B2 | 19/09/2007 |
| | | JP 2001-500073 A | 09/01/2001 |
| | | JP 2004-001384 A | 08/01/2004 |
| | | NZ 332182 A | 27/03/2000 |
| | | PT 892719 E | 31/01/2003 |
| | | US 05897941 A | 27/04/1999 |

Form PCT/ISA/210 (patent family annex) (July 2009)

INTERNATIONAL SEARCH REPORT
Information on patent family members

International application No.

**PCT/KR2014/008589**

| Patent document cited in search report | Publication date | Patent family member | Publication date |
|---|---|---|---|
| | | US 5897941 A | 27/04/1999 |
| | | WO 97-38857 A1 | 23/10/1997 |
| | | ZA 9702982 A | 03/11/1997 |

Form PCT/ISA/210 (patent family annex) (July 2009)

## REFERENCES CITED IN THE DESCRIPTION

### Patent documents cited in the description

- JP 2002 A
- JP 216714 A
- KR 1020080081845
- JP 2002216714 A